(19) Europäisches Patentamt

European Patent Office

Office européen des brevets

(11) **EP 1 063 273 A1**

(12) **EUROPEAN PATENT APPLICATION**
published in accordance with Art. 158(3) EPC

(43) Date of publication:
27.12.2000 Bulletin 2000/52

(51) Int. Cl.[7]: **C10G 9/00**, C10G 9/36,
F28D 7/10

(21) Application number: 99936085.2

(22) Date of filing: 11.02.1999

(86) International application number:
PCT/RU99/00038

(87) International publication number:
WO 99/43765 (02.09.1999 Gazette 1999/35)

(84) Designated Contracting States:
**AT BE ES FI FR IT NL PT SE**

(30) Priority: 27.02.1998 RU 98104821

(71) Applicants:
• **Coolbrook Limited**
**Road Town, Tortola (VG)**
• **Bushuev, Vladimir Andreevich**
**Moscow, 109388 (RU)**

(72) Inventor:
**BUSHUEV, Vladimir Andreevich**
**Moscow, 109388 (RU)**

(74) Representative: **Ström, Tore et al**
**Ström & Gulliksson AB**
**Studentgatan 1**
**P.O. Box 4188**
**203 13 Malmö (SE)**

(54) **METHOD FOR PRODUCING LOWER OLEFINS, REACTOR FOR THE PYROLYSIS OF HYDROCARBONS AND DEVICE FOR QUENCHING PYROLYSIS GASES**

(57)     A process and apparatuses for producing low-molecular olefins by pyrolysis of hydrocarbons comprising preheating and evaporating a starting feedstock, mixing the same with steam-diluent, thermal cracking a resulting mixture in a blading rotary reactor by heat generated inside the volume of reacting mixture due to hydrodynamic drag of the rotor blades rotating therein, quenching cracked gas and subsequent separation of it. The heating reacting mixture to pyrolysis temperature is performed by mixing with hot pyrolized gas being circulated in a working cavity of the blading rotary reactor for a negligible time in comparison with a duration of pyrolysis reactions. The process enables to increase the low-molecular olefins yield.

FIG. 3

Printed by Xerox (UK) Business Services
2.16.7 (HRS)/3.6

## Description

### Field of the invention

The invention relates to the petrochemical industry, specifically to the production of low-molecular olefins by thermal cracking (pyrolysis) of hydrocarbons.

### Background of the invention

At present a thermal pyrolysis of hydrocarbons is the basic process of commercial production of low-molecular olefins - ethylene and propylene. As a feedstock there are used hydrocarbons which molecule has two or more atoms of carbon. In industry there are generally used gases of petroleum refining, as well as naphtha and gas oil fractions.

In generally accepted technology a feedstock evaporated and mixed with steam, is supplied into a cracking tube located inside radiant section of pyrolysis furnace, wherein the mixture is rapidly heated. Pyrolysis reactions proceed with large absorption of heat. A cracked gas having the outlet temperature 750-950°C is quenched and transported into a gas fractionating plant, in which ethylene, propylene, butadiene, methane, hydrogen and other pyrolysis products are separated. Ethylene is the most valuable product of pyrolysis.

During pyrolysis of hydrocarbons a pyrocarbon is always evolved, part of which in the form of soot particles is carried away by flow of cracked gas, but the another part forms coke deposits on the walls both of cracking tubes and downstream apparatuses as well. Coke deposits increase a pressure drop through cracking tubes and deteriorate a proper heat transfer into reaction zone, resulting in overheating the cracking tubes, decrease in, productivity of pyrolysis plant and decrease in low-molecular olefin yields. Therefore coke deposits are periodically removed, usually this is performed by burning out with air or air-steam mixture.

Among reactions of thermal pyrolysis there can be distinguished: the primary reactions resulting in formation of olefins and the secondary ones, during which formed olefins are wasted. With temperature increase these reactions are accelerated, both primary and secondary, but the rate of primary reactions increases quicker than the rate of secondary ones. The rate of primary reactions does not depend on pressure, whereas the rate of secondary reactions decreases with pressure decrease. Therefore, to increase the olefin yields there strive to decrease hydrocarbon partial pressure in reaction zone and increase the process temperature within regulation limits. The hydrocarbon partial pressure can be decreased by adding a steam-diluent. An optimal amount of steam-diluent depends on composition of hydrocarbon feed. For light feedstock - ethane or propane - the amount of steam usually is 20-40% of feedstock mass. For heavy feedstock, as gas oils, a steam can amount to 80-100% of feedstock mass. It is undesirable to increase the pyrolysis temperature above 950-1000°C, because this accelerates sharply coke formation and causes growth of less valuable acetylene yield at the expense of ethylene.

Among disadvantages of commercial tubular cracking reactor the following is noteworthy:

a. it is necessary to transfer a large amount of heat into reaction zone through the cracking tube walls. Because of large heat flows the temperature of cracking tube wall much exceeds the temperature of a process stream causing an intensive coke formation and decrease in desired products yield. It is impossible to decrease the pressure in the zone of pyrolysis because of necessity to provide a high rate of feedstock flow through this zone required by conditions of heat transfer;

b. a rate of feedstock heating through cracking tube is insufficient. Because of this a starting amount of desired olefins formed at relatively low temperatures and carried further by feedstock flow through more and more intensively heated zones resides an excess time under conditions, when secondary reactions proceed with grate intensity. This disadvantage becomes apparent greatly in pyrolysis of wide petroleum fractions, such as naphtha or gas oil, which contain as high-molecular hydrocarbons cracked easily, as low-molecular hydrocarbons cracked at higher temperatures.

US Patent 5300216 discloses method and apparatus for thermal cracking hydrocarbons in presence of steam by passing through stationary shock wave of high intensity. A steam superheated in tubular heater to the temperature about 1000°C is introduced at the pressure about 2.7 MPa through supersonic nozzle into reactor comprising series-positioned mixing and pyrolysis zones. In the mixing zone the hydrocarbon feed - ethane - preheated to the temperature about 627°C is introduced through mixers into supersonic flow of steam. Resulting mixture forms a supersonic process stream which has a temperature lower that required to initiate pyrolysis reactions. Between the said mixing and pyrolysis zones a straight compression shock - continuous-standing shock wave - is created. When passing through this compression shock a kinetic energy of the supersonic process stream is converted into the heat. Immediately downstream of the compression shock the velocity of the process stream falls to subsonic level, and the temperature rises up to about 1000°C at the pressure about 0.9 MPa abs. The process stream passes the pyrolysis zone for 0.005-0.05 sec. while its temperature decreases about to 863°C at the expense of heat absorbed by pyrolysis reactions. Conversion of ethane into ethylene achieves 70%. Cracked gas passes quenching apparatus and downstream heat exchangers, and further is transported to gas separation. In this apparatus all said above disadvantages of tubular pyrolysis reactors are eliminated. The feedstock reaches maximum pyrolysis temperature utmost rapidly, and the walls of pyrolysis section are not used for transfer of heat into reaction zone. But at the same time the required amount of steam per hydrocarbon mass rate must be about 500-667%. In connection with this energy expenses per unit of produced ethylene are excessively high and unable to be essentially decreased. This renders the apparatus noncompetitive at current interrelation of energy costs with olefin costs.

US Patent 4426278 discloses tubular pyrolysis reactor including a steam superheater, an apparatus for mixing superheated steam with hydrocarbon and a cracking tube positioned inside radiation block. Coming from the superheater a steam with the temperature 1000-1500°C is mixed with hydrocarbon feed, so as to obtain immediately a temperature of resulting mixture required to initiate pyrolysis reactions. In this reactor the said above disadvantage (b) is partly eliminated. However, at the temperature 1100°C the steam must be supplied in amount 185-275% in a ratio to hydrocarbon mass rate, and at the temperature 1430°C - about 120%. Preparation of superheated steam with such high temperature is extremely difficult and energy expenses are excessively high.

US Patent 3579601 discloses tubular pyrolysis reactor in which a feedstock is introduced into cracking tube at several points arranged along its length. Every portion of introduced feedstock reaches at once a temperature enough for starting pyrolysis reactions due to practically instant mixing with hot pyrolized gas incoming from upstream cracking tube run. Pyrolysis is maintained further by heat supplied through cracking tube walls. This invention eliminates partly the disadvantage (b), but the disadvantage (a) remains. The yields of olefins and other unsaturated hydrocarbons are increased, and coke deposition and methane formation are decreased. The disadvantage of this invention is a complicated configuration of the cracking tube making difficulties for positioning it within radiant chamber of a beater.

USSR Author's Certificate 1189871 discloses process for thermal cracking naphtha and gas oils. A feedstock is separated into several fractions boiling out in intervals every 20-40°C. Such prepared narrow fractions are pyrolized in individual cracking tubes under optimal thermal conditions suitable for each fraction. This process enables to diminish the disadvantage (b), increase a yield of low-molecular olefins and decrease a coke formation, but technical realization of this process is associated with essential complication of radiant chamber structure because it necessitates to create individual thermal conditions in several cracking tubes under unsteady interrelation of feedstock flow rates in them.

US Patent 4265732 discloses process for thermal cracking gaseous hydrocarbon feed in a reactor constructed as multistage blading machine of axial type. A heat required for pyrolysis is generated directly inside a volume of reacting gas due to hydrodynamic drag of the rotor blades rotated therein by a drive. This invention eliminates completely the disadvantage (a), but the disadvantage (b) is not eliminated. Needed for process realization an axial type multistage blading apparatus capable of operation under the temperatures of hydrocarbon pyrolysis has not been fabricated.

US Patent 5271827 discloses tubular pyrolysis furnace provided with adiabatic tube reactor located between cracking tube outlet and an inlet of quenching apparatus. In the adiabatic tube reactor the pyrolysis is carried out at the expenses of intrinsic heat of reacting fluid without heat supply from outside. A use of the adiabatic tube reactor enables to economize on energy expenses required for pyrolysis.

.Essential component of pyrolysis plants is the means for quenching cracked gas leaving reactor to the temperature of stopping undesirable secondary reactions. The quenching can be both direct - by injection of steam, water or light pyrolysis tar - and indirect - by using a heat exchanger. The direct quenching is usually applied in thermal cracking of gas oils. In thermal cracking of light hydrocarbons the indirect quenching in heat exchanger apparatus is usually applied generating simultaneously a high pressure steam.

PCT Application WO 95/32263 claims apparatus for quenching cracked gas. This apparatus comprises two spaces separated by a wall. A cracked gas flows in tubes which form one of the said spaces, and a cooling water is boiled in the another space. Because of small diameter of these tubes the apparatus of such type causes great flow resistance and is disposed also to coking. Usually the pressure drop through purged apparatus is not less 0.02-0.03 MPa, and in coked state it reaches 0.07 MPa and higher, that increases the inner pressure in upstream pyrolysis reactor and thereby decreases olefins yield. It could be possibly to decrease the pressure drop through apparatus by increase a diameter of heat transfer tubes, but such solution is impermissible since this results in decrease of quenching rate.

## Summary of the invention

The aim of the invention is creation of a process for producing low-molecular olefins by thermal pyrolysis of hydrocarbons, reactor for pyrolysis of hydrocarbons and apparatus for quenching cracked gas, which serve for realization of this process.

In this process:

    a. a heat is not transferred into reaction zone through walls closing this zone.
    b. a heating hydrocarbon feed to pyrolysis temperature is performed for negligible time in comparison with duration of pyrolysis reactions.
    c. an amount of added steam-diluent per weight of hydrocarbon feed does not exceed the regulation limits accepted in existing pyrolysis plants.

The first invention of the said above group is the process for producing low-molecular olefins by thermal pyrolysis of hydrocarbons. This process comprises the following stages: preheating and evaporating a starting feedstock; mixing the same with a steam-diluent; heating resulting mixture to pyrolysis temperature in a blading rotary reactor by heat generated inside a volume of reacting mixture due to hydrodynamic drag of the rotor blades rotating therein; quenching a cracked gas and subsequent separation of it. In this process the reacting mixture is heated to pyrolysis temperature for negligible time in comparison with a duration of pyrolysis reactions due mixing with hot pyrolyzed gas being circulated in a working cavity of the blading reactor.

Preheating the feedstock and steam-diluent can be performed in two stages, where the second stage is carried out in a heat exchanger by heat taken away from the cracked gas leaving the reactor.

In comparison with the process under US Patent 4265732 the present novel process increases desired olefins yield due to instant heating the reacting mixture up to maximum pyrolysis temperature by mixing with hot gases just pyrolized and yet circulated in working cavity of the reactor. The heat of cracked gas leaving the blading reactor is utilized for preheating the feedstock and steam-diluent entering into reactor, that enables to simplify a structure of heat exchanger due to decrease in difference of pressure in heated and cooled sections and reduce also energy expenses for carrying out the process.

The second invention of the group is the novel reactor for pyrolysis of hydrocarbons. This reactor comprises a housing provided with directing stationary blades, an inlet nipple for supplying feedstock, an outlet nipple for carrying off cracked gas and a working wheel provided with a blade crown. The housing has an annular cavity for circulation of hot pyrolized gas, where the directing stationary blades are located. This cavity surrounds the blade crown of the working wheel on periphery, and the inlet and outlet nipples are communicated with the said cavity.

The housing of the reactor can consist of a casing and inner heat-resistant skin fastened together. The inner surfaces of the casing can be heat-insulated.

As distinct from the reactor under US Patent 4265732 the present reactor enables to heat the mixture of feedstock and steam-diluent to maximum pyrolysis temperature practically instant due mixing with hot pyrolized gases, thus resulting higher yields of low-molecular olefins. The another advantage of this reactor is louver-damper configuration enabling to make it in one-stage variant and of materials wide known and used presently in technique.

The third invention of the group is the apparatus for quenching cracked gas. The apparatus comprises a heat exchanger having two spaces separated by a wall, for fluids being heated and cooled. This apparatus is provided with a tee and with an ejector comprising a nozzle, admission and mixing chambers. The mixing chamber and one of the tee nipples are communicated with the space of cooled fluid, and the admission chamber is connected with the another nipple of the tee.

Such configuration of the apparatus for quenching cracked gas provides both a short time of quenching and small pressure drop through the apparatus as well, so that to obtain decrease in pressure in upstream reaction zone contributing to achievement of the main aim - increase in low-molecular olefins yield.

**Brief description of the drawings**

Fig. 1 is a schematic view of the installation for realization of the process for producing low-molecular olefins.
Fig. 2 is a sectional view of the reactor for pyrolysis of hydrocarbons.
Fig. 3 is a cross-sectional view taken on line A-A in Fig. 2.
Fig. 4 is a sectional view of the radial working blade of the reactor.
Fig. 5 is a view on the arrow B in Fig. 4.
Fig. 6 is a sectional view of the apparatus for quenching cracked gas.

**Description of the preferred embodiments**

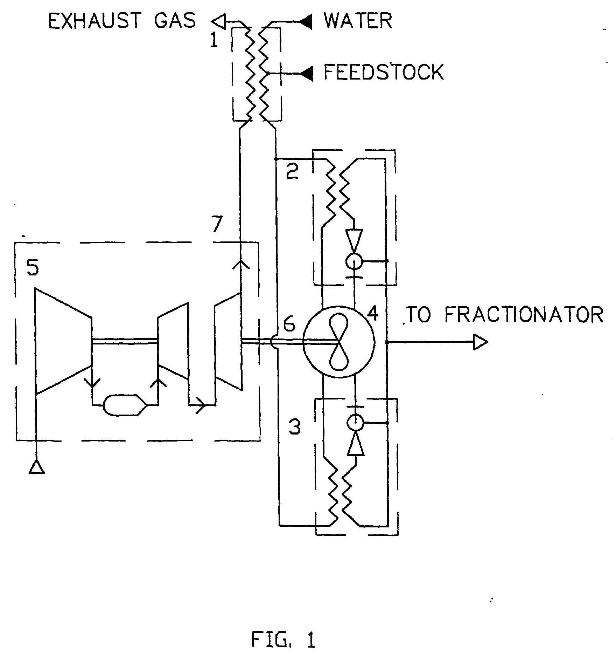

The installation (Fig. 1) for realization of the process includes preheater 1, apparatuses 2 and 3 for quenching cracked gas, reactor 4, gas-turbine engine 5 connected with reactor 4 by shall 6, and with the preheater 1 by exhaust pipe 7.

Preheating a feedstock and steam-diluent in the first stage is carried out in the preheater 1. The hydrocarbon feed from outside source (not shown in drawings) is conveyed by pressure into the preheater 1 configured as a shell-tube heat exchanger. The exhaust gas from the gas-turbine engine 5 is discharged into intertubular space of this heat exchanger. From outside source (not shown in drawings) a water is conveyed by pressure into the preheater 1 where the water is evaporated, and resulting steam-diluent is mixed with the hydrocarbon feed.

Preheating a feedstock and steam-diluent in the second stage is carried out in the apparatuses 2 and 3 for quenching cracked gas by utilization of heat of cracked gas leaving the reactor. Detailed description of the apparatus for quenching cracked gas will be given below.

The mixture of feedstock and steam-diluent from the apparatuses 2 and 3 for quenching cracked gas is conveyed into the binding reactor 4. Hot pyrolized gases are circulated along the working annular cavity of the reactor, and the heat needed for pyrolysis is generated directly inside the volume of reacting mixture due to hydrodynamic drag effect of rotating working wheel provided with the blades. Heating the reacting mixture to pyrolysis temperature is performed by mixing it with the hot pyrolized gas for the negligible time in comparison with a duration of pyrolysis reactions. Detailed description of the reactor structure will be given below.

The cracked gas from the reactor 4 is conveyed into the quenching apparatuses 2 and 3 through interconnecting pipes having smooth shape to prevent formation of flow detachment zones. All these interconnecting pipes are equalized in volume.

The cracked gas is quenched in the apparatuses 2 and 3 and then transported into a gas fractionating plant (not shown in the drawings). In the Fig. 1 there are depicted two apparatuses for quenching cracked gas, but the number of this apparatus is not limited in the invention practical realization.

As a reactor drive the gas-turbine engine 5 is applied. Shown in Fig. 1 the gas-turbine engine is of a simple thermodynamic cycle without intermediate heaters and coolers of the working fluid. As a drive there can be used gas-turbine engines operating in more compound cycle, as well as steam turbine or electric motor.

The amount of water being mixed with hydrocarbon feed and tolerance final temperature depend on composition of feedstock. If a feedstock is the ordinary gaseous hydrocarbons, the amount of added water may be to 30-40% in ratio to hydrocarbon weight rate, and the temperature of reacting mixture after second preheating should not exceed 650°C. If the ordinary liquid hydrocarbons - such as naphtha or gas oils - are used as a feedstock, the water may be added in amount to 80-100% in ratio to hydrocarbon weight rate, and relevant temperature of reacting mixture after second preheating should not exceed 550-600°C.

The basic parameters defining operation of the reactor are tied together by the following relationship:

$$\tau = V \times d \times H/P$$

where:

$\tau$ (sec) is the mean residence time of reacting mixture in the reactor;
$V$ ($m^3$) is the volume of the reactor working space;
$d$ ($kg/m^3$) is the mean density of reacting mixture within the reactor working space;
$H$ (J/kg) is the energy transferred into reacting mixture within the reactor working space;
$P$ (W) is the power transferred into the reactor working space.

The energy, which should be transferred into reacting mixture within the reactor working space, is near to amount of heat transferred into process stream flowing through a radiant coil in traditional tubular pyrolysis furnaces operating with the same kind of feedstock. In pyrolysis of ethane this energy should be about 2.5-3.4 MJ per kg of steam deluted feedstock. In pyrolysis of other kinds of hydrocarbon this energy should be about 1.7-2.3 MJ/kg.

The mean residence time of reacting mixture inside the reactor working space can be about 0.03-0.1 sec.

The period of time for heating the incoming feed/steam mixture from the temperature when entering into the reactor up to pyrolysis temperature is defined by duration of mixing with reacting mixture being processed and does not exceed 0.001 sec. It is negligible short time in comparison with the residence time of reacting mixture within a working space of the reactor.

The mean density of reacting mixture is defined by average pressure, by average temperature in working space of the reactor and by average molecular weight of reacting mixture.

The average pressure within working space of the reactor can be arranged of 0.05-0.2 MPa (abs), preferably 0.08-0.12 MPa (abs).

The average gas temperature in the reactor working cavity depends on the feedstock composition, assigned conversion and residence time within reaction zone. Light feedstock and high conversion require the higher temperatures, but heavy feedstock - as atmospheric and vacuum gas oils - and low conversion require lower temperatures.

Operator sets the gas temperature in working cavity of the reactor and the rates of hydrocarbon feed and water for preparing steam-diluent. The set temperature is maintained by automatic control system regulating a rate of fuel gas feeding the gas-turbine engine. So the temperature in the reaction zone of the reactor is regulated as in principle as it is done in the traditional tubular furnace - by changing a rate of fuel gas in ratio to a rate of feedstock. A difference is that transient processes in the novel reactor are ended faster in 10-100 times.

To remove a coke from the reactor and the apparatuses for quenching cracked gas it is necessary to stop supply of hydrocarbon feed into the preheater 1. The temperature in the working cavity of the reactor must be maintained much the same as the temperature during pyrolysis. In the result of gazification reactions a superheated steam removes the coke deposits from the reactor 4 as well as from transfer tubes and apparatuses 2 and 3 for quenching cracked gas. Outgoing flow is conveyed into afterburning installation (not shown in drawings). The process of decoking is controlled through analysis of outgoing flow. When the contents of carbon oxide and carbon dioxide fall to beforehand assigned values, decoking is stopped and supply of hydrocarbon feed is renewed. The advantage of such burning-out in comparison with air or air-steam burning-outs are endothermicity of the proceeding reactions eliminating a danger of local overheating construction materials. The another advantage is that reducing conditions inside the reactor remain at all regimes of operation, enabling fabrication of the most important reactor elements of the heat-resistant alloys on base of heat-proof metals unstable under oxidizing conditions, for example of the alloys on base of wolfram or molybdenum, or niobium.

In the present process the pyrolysis of feedstock proceeds in series in the working cavity, and further in transfer pipelines conveying pyrolized gas to the quenching apparatuses. The hydrodynamic regime realized within the reactor working cavity is close to regime peculiar to apparatus of ideal mixing, where concentrations of reactants are homogenized through-out the area of this cavity. The process essentially differs by this from process realized in traditional tubular reactors and from the process disclosed by US Patent 4265732 as well.

Since the pyrolysis in the reactor working space proceeds in presence of just cracked products of high concentration, the pyrolysis reactions are accelerated due to autocatalysis phenomenon. Because of this the pyrolysis can be carried out also at lower temperature thus increasing the process selectivity. This is confirmed by experimental data on pyrolysis of hydrocarbons in presence of hot pyrolized gases, indicated in US Patent 3579601.

Inside transfer pipelines the pyrolysis proceeds adiabatically, without supply of heat from outside. The hydrodynamic regime realized here is close to regime peculiar to apparatus of ideal displacement as in tubular reactors. The available adiabatic run enables to economize on energy expensed for carrying out the pyrolysis process and enables also to increase the olefin yields.

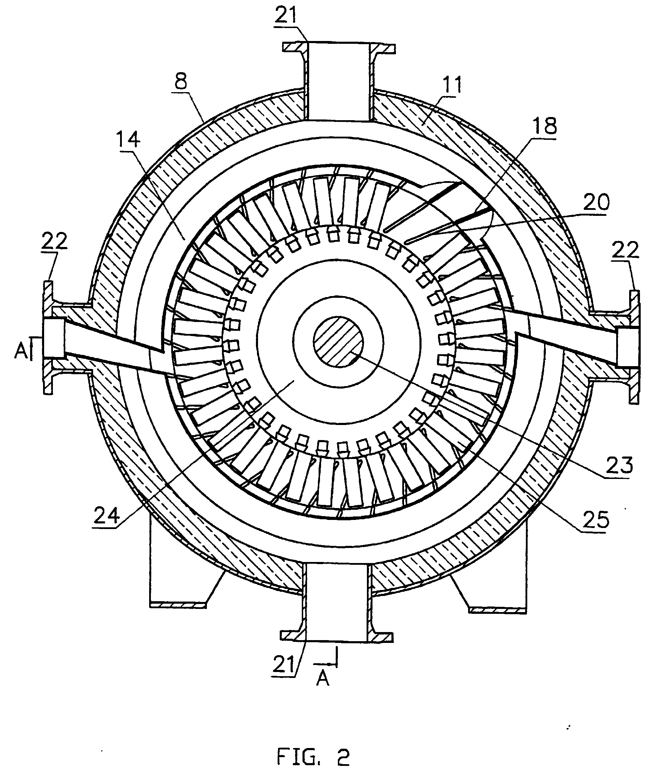

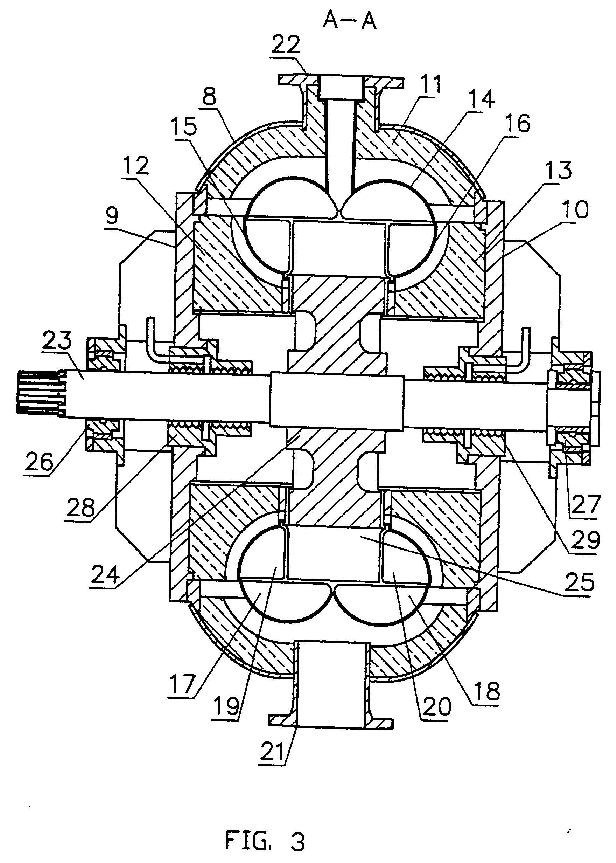

The rotary blading reactor (Fig. 2 and 3) for hydrocarbon pyrolysis comprises a housing including casing 8 with lids 9 and 10. Inner surfaces of the casing 8 and the lids 9, 10 are covered with heat insulators 11, 12 and 13. The housing comprises also a heat resistance skin formed by element 14 fastened together with the casing 8, and elements 15 and 16 fastened together with the lids 9 and 10. With the element 14 the directing blades 17 and 18 are fastened together. Directing blades 19 and 20 are fastened together with the elements 15 and 16. The casing 8 is provided with nipples 21 for supplying feedstock and nipples 22 for carrying off the cracked gas. A rotor consists of shaft 23 and working wheel 24 provided with working blades 25. The latter form the blade crown of the working wheel 24. The shaft 23 is supported by radial 26 and radial-thrust 27 bearings and is sealed up by double labyrinth packings 28 and 29 into channels of which a steam is injected from outside (not shown in the drawings).

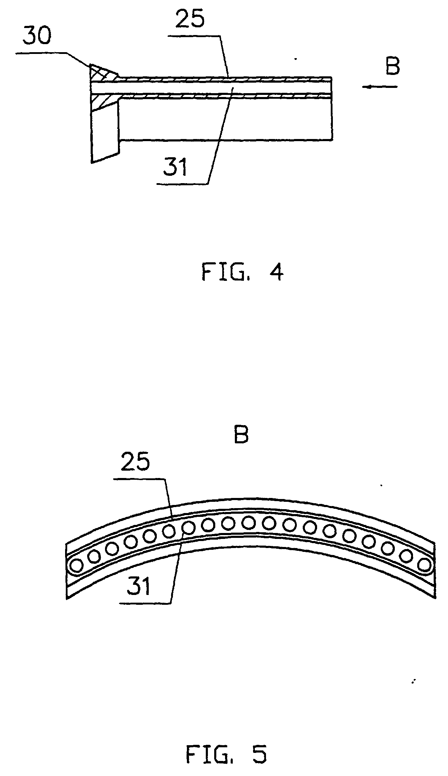

Each working blade 25 (Fig. 4 and 5) has a tail 30, by which they are fixed on a rim of the working wheel 24 forming a dovetail lock. In the blade 25 the radial channels 31 are made for passing a mixture of feedstock with steam-diluent used as cooling agent.

The reactor operates in the following way. Through the supplying nipples 21 a mixture of evaporated feedstock with steam-diluent enters into a gap between the casing 8 and the heat resistant skin, passes further through the channels made in the working wheel 24 and in the working blades 25 and enters into the annular working cavity where the working blades 25 and the directing blades 17, 18, 19, 20 are arranged. Processed fluid being circulated along the annular cavity comes into multiple contacts in turn with the stationary directing blades and rotating working blades, thereby creating streamlines in the form of two spirals rolled up into vortex rings of right and left directions. Thus two communicating loops of pyrolized gas circulation are created. A heat being absorbed by endothermic reactions, which continuously proceed within the reactor working space, is compensated by influx of heat arose from converting kinetic energy into heat.

A power transferred into the said circulation loops is proportional to product of the rotor peripheral velocity and meridional velocity and density of the processed fluid. With increase of meridional velocity the power, dissipated by rotor, increases until this velocity reaches 0.64-0.7 sonic velocity in this fluid, e.g. about 400-500 m/s. At higher meridional velocities the power dissipated by rotor into reaction zone sharply decreases because of decrease of the fluid density averaged along a height of the blade. This is connected with a fact, that in the core of vortex ring the pressure is lower than on its periphery, and this lowering depends on the meridional velocity of the fluid.

During every passing over the working blade the reacting fluid acquires an additional kinetic energy, which for the time before next passing is converted into a heat. This occurs partly due to passing the fluid through stationary compression shocks arising in places of local transition of the fluid through sonic barrier, and partly due to vortex formation. The additional kinetic energy is proportional to product of the rotor peripheral velocity and meridional velocity of the fluid. For example, at the rotor peripheral velocity 300-400 m/s this energy can be about 70-150 kJ/kg. During the time of residence within circulation loop every particle of feedstock should pass over the rotor working blades several tens times on average.

The advantage of the rotary blading reactor in comparison with traditional tubular reactors is that its walls defining the reaction zone are not used for heat transfer, therefore, in absence of cooling the walls, their temperature differs from the temperature of reacting fluid insignificantly. Lower wall temperature and pressure in the reaction zone in comparison with the same in traditional tubular reactors enable to expect for increase in the process selectivity and increase in desired product yields when processing the same kinds of feedstock. Short time of the installation starting and possibility of full automation of its operation and control contributes to increase in the desired product yields.

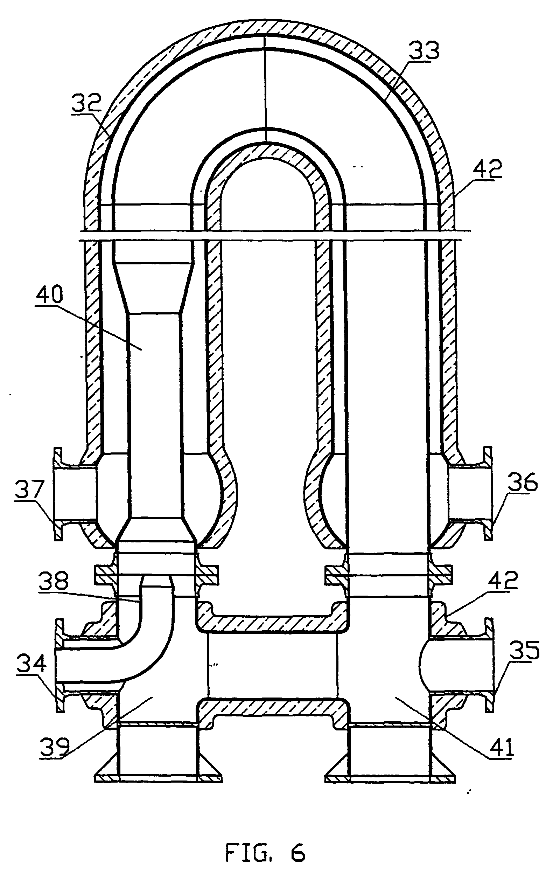

The apparatus for quenching cracked gas (Fig. 6) includes "tube-in-tube" heat exchanger comprising outer tube 32 and inner tube 33, inlet 34 and outlet 35 nipples for conveying cracked gas, inlet 36 and outlet 37 nipples for conveying cooling agent communicated with intertubular space, and ejector comprising nozzle 38, admission chamber 39 and mixing chamber 40. The nozzle 38 is connected with the inlet nipple 34. The inner tube 33 is connected by one end with the mixing chamber 40 and by another end through the tee 41 with the admission chamber 39 and the cracked gas outlet nipple 35. Outer surfaces of the quenching apparatus are covered by heat insulator 42.

Hot gas entering through the nipple 34 is formed by the nozzle 38 into a jet which sucks cooled gas being in the admission chamber 39. Resulting mixture flowing through the inner tube 33 cools down, giving back its heat to the fluid flowing through the intertubular space between the outer tube 32 and the inner tube 33 in direction from the nipple 36 to the nipple 37. Some part of cooled mixture enters into the admission chamber 39, and residual part is removed out of the apparatus through the nipple 35.

Outgoing from the nipple 35 cooled cracked gas can have the temperature about 350-400°C. Mass rate of the mixture in the inner tube exceeds about in 2-2.5 times the rate of cracked gas coming from the reactor, and the mixture being formed in the mixing chamber 40 can have the temperature about 620-660°C.

Duration of cracked gas quenching is defined only by time of mixing the jet formed by the nozzle 38 with cooled gas from the mixing chamber 40 and can be of some milliseconds. Diameter of the inner tube 33 must be enough that it should not cause considerable pressure resistance.

A heat exchanger included in the apparatus for quenching cracked gas can be of any different structure than "tube-in-tube" type. Subtle difference in pressure between heated and cooled fluids and low values of pressure enable to apply a plate heat exchanger or any others having less both a mass and a cost in comparison with quenching apparatus used usually.

## Commercial applicability

The invention is intended for use in ethylene production plants as modernized as newly constructed, instead of tubular pyrolysis furnaces. Composition of pyrolysis products prepared on the novel process differs insignificantly from one in exiting furnace installations operating with the same feedstock. Therefore a use of the process should not practically demand to change fractionating and gas separation plants.

For novel installations there can be used gas turbine engines of small size without intermediate preheaters and coolers of a working fluid. Efficiency of such engines is usually 26-35% at the temperature of exhaust gas 400-500°C. Best samples of such engines can have efficiency 42% at the temperature of exhaust gas 570°C. High temperature of exhaust gas enables to use effectively its heat for evaporating and preheating feedstock, for steam-diluent preparation and also for superheated steam generation in amount enough to drive compressors of a gas separation plant. As a fuel there can be used natural gas or methane-hydrogen fraction separated from cracked gas in gas separation plant. A noise made by gas-turbine engine does not exceed the noise made by acoustic gas burners in traditional pyrolysis furnaces. To carry off an exhaust gas from gas-turbine engines there can be used chimneys similar to ones usually used in tubular furnaces. For pyrolysis plant with capacity on hydrocarbon feed about 80,000 tonnes per year it should be required a gas-turbine engine of power about 8-12 megawatts. Such engines are fabricated serially and are capable of long-time operation under conditions of continuous loading, as gas-blowers in gas pumping stations of arterial gas pipelines. Full durability of such engines can run up to 100,000 hours.

In designing novel pyrolysis installations it might be as practicable to use materials, operational experience and technologies used by producers of gas-turbine engines. If a reactor and its gas-turbine drive will be made in the same factory, the pyrolysis installation can be configured on a common framework in the form of compact aggregate of full readiness.

## Claims

1. A process for producing low-molecular olefins by pyrolysis of hydrocarbons, which comprises preheating and evaporating a starting feedstock, mixing the same with a steam-diluent, heating a resulting mixture to pyrolysis temperature in a blading rotary reactor by heat generated inside a volume of the mixture due to hydrodynamic drag of the rotor blades rotating therein, quenching a cracked gas and subsequent separation of it, wherein the said heating the mixture to the pyrolysis temperature is performed by mixing with hot pyrolized gas being circulated in a working cavity of the blading rotary reactor for a negligible time in comparison with a duration of pyrolysis reactions.

2. The process of claim 1, wherein the said preheating the feedstock and steam-diluent is performed in two stages, and in the second stage the preheating is carried out in a heat exchanger by utilizing a heat contained in the cracked gas outgoing from the blading rotary reactor.

3. A reactor for pyrolysis of hydrocarbons comprising a housing with directing stationary blades, an inlet nipple for supplying feedstock, an outlet nipple for carrying off cracked gas and a working wheel provided with a blade crown, wherein

the said housing has an annular cavity for circulation of hot pyrolized gas, which contains the directing stationary blades and surrounds the blade crown of the working wheel along periphery, and the said inlet nipple for supplying feedstock and outlet nipple for carrying off cracked gas are communicated with the said cavity.

4. The reactor of claim 3, wherein the housing consists of a casing and a heat-resistant skin fastened together, and the casing is covered on the inside by heat insulation.

5. An apparatus for quenching cracked gas comprising a heat exchanger having spaces for cooled and heated fluids separated by a wall, wherein

the said apparatus is provided with a tee and with an ejector comprising a nozzle, admission chamber and mixing chamber, so that the mixing chamber of the ejector and one of nipples of the tee are communicated with the space of cooled fluid, and the admission chamber of the ejector is connected with the another nipple of the tee.

EXHAUST GAS WATER

FEEDSTOCK

TO FRACTIONATOR

FIG. 1

FIG. 2

A−A

FIG. 3

FIG. 4

FIG. 5

FIG. 6

EP 1 063 273 A1

<table>
<tr><td colspan="2"><strong>INTERNATIONAL SEARCH REPORT</strong></td><td>International application No.<br>PCT/RU 99/00038</td></tr>
</table>

**A. CLASSIFICATION OF SUBJECT MATTER[6]:**
C10G 9/00, 9/36; F28D 7/10

According to International Patent Classification (IPC) or to both national classification and IPC

**B. FIELDS SEARCHED**

Minimum documentation searched (classification system followed by classification symbols)
C10G 9/00, 9/16, 9/36, 51/02; F28D 7/10

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | US 4265732 A (KINETICS TECHNOLOGY INTL. B.V.) 5 May 1981 (05.05.81) | 1-4 |
| A | SU 977477 A (JU.S. SABADASH et al) 30 November 1982 (30.11.82) | 1-4 |
| A | GB 2000181 A (UNION CARBIDE CORPORATION) 4 January 1979 (04.01.79) | 1-4 |
| A | FR 2068724 A ( MITSUI SHIPBUILDING AND INGINEERING CO. LTD et al) 27 August 1971 (27.08.71) | 1-4 |
| A | US 4589473 A (BORSIG GMBH) 20 May 1986 (20.05.86) | 5 |
| A | SU 1032012 A (INSTITUT GAZA AN UKRAINSKOI SSR) 30 July 1983 (30.07.83) | 5 |

☐ Further documents are listed in the continuation of Box C.    ☐ See patent family annex.

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search<br>14 May 1999 (14.05.99) | Date of mailing of the international search report<br>03 June 1999 (03.06.99) |
|---|---|
| Name and mailing address of the ISA/<br><br>Facsimile No.     RU | Authorized officer<br><br>Telephone No. |

Form PCT/ISA/210 (second sheet) (July 1992)

14